Europäisches Patentamt

European Patent Office

Office européen des brevets

(19)

(11) **EP 1 372 053 B1**

(12) **FASCICULE DE BREVET EUROPEEN**

(45) Date de publication et mention
de la délivrance du brevet:
**18.01.2006 Bulletin 2006/03**

(51) Int Cl.:
***G05D 1/08*** *(2006.01)*

(21) Numéro de dépôt: **03291257.8**

(22) Date de dépôt: **27.05.2003**

(54) **Procédé et système de pilotage d'un aéronef**

Flugzeugsteuerungssystem und -verfahren

Aircraft steering system and method

(84) Etats contractants désignés:
**AT BE BG CH CY CZ DE DK EE ES FI FR GB GR
HU IE IT LI LU MC NL PT RO SE SI SK TR**

(30) Priorité: **12.06.2002 FR 0207197**

(43) Date de publication de la demande:
**17.12.2003 Bulletin 2003/51**

(73) Titulaire: **AIRBUS France
31060 Toulouse (FR)**

(72) Inventeur: **Walter, Stéphane
31490 Brax (FR)**

(74) Mandataire: **Hauer, Bernard
Cabinet Bonnétat
29, Rue de Saint-Pétersbourg
75008 Paris (FR)**

(56) Documents cités:
**US-A- 3 793 574          US-A- 3 848 833
US-A- 4 011 440          US-A- 4 032 094
US-A- 4 209 734**

**Description**

La présente invention concerne un procédé et un système de pilotage d'un aéronef, qui sont destinés à engendrer des ordres de pilotage dudit aéronef selon au moins un axe de pilotage.

Elle concerne plus précisément un système de pilotage qui comprend au moins deux lois de pilotage différentes. On sait qu'une loi de pilotage est une fonction qui permet de déterminer des ordres de pilotage de l'aéronef destinés à être transmis à des gouvernes de ce dernier, en fonction de divers paramètres disponibles sur l'aéronef, tels que, par exemple, la vitesse, l'incidence, l'assiette, des ordres du pilote et éventuellement des dérivées et des intégrales de ces paramètres.

Généralement, le choix entre les différentes lois de pilotage, pour engendrer les ordres de pilotage à transmettre aux gouvernes, est réalisé en fonction des valeurs de différents paramètres de l'aéronef.

Un telle mise en oeuvre entraîne des inconvénients. En particulier, dans le cas d'un pilotage selon l'axe de tangage, il est souvent difficile avec un tel mode de sélection, de maintenir l'incidence de l'aéronef, inférieure à une valeur maximale prescrite.

Par ailleurs, le document US-4 209 734 décrit un système de commande à double voie pour un pilote automatique d'un aéronef. Ce système de commande combine les sorties des deux voies pour positionner une surface de contrôle d'attitude de l'aéronef. De plus, ce système connu comporte des moyens permettant de compenser tout mouvement de ladite surface de contrôle d'attitude, dû à un dysfonctionnement dans une voie, par un mouvement qui est engendré, en réponse, par l'autre voie.

La présente invention concerne un procédé de pilotage particulièrement efficace, qui permet notamment de remédier aux inconvénients précités.

A cette fin, selon l'invention, ledit procédé de pilotage d'un aéronef, destiné à engendrer des ordres de pilotage dudit aéronef selon au moins un axe de pilotage, procédé selon lequel on utilise au moins deux lois de pilotage différentes, relatives audit axe de pilotage et permettant chacune de déterminer des ordres de pilotage en fonction de paramètres de l'aéronef, est remarquable en ce que l'on réalise, de façon automatique et répétitive, les opérations suivantes :

> a) pour chacune desdites lois de pilotage, on calcule la dérivée par rapport au temps de la fonction qui correspond à ladite loi de pilotage et qui prend en compte les valeurs actuelles des paramètres correspondants ;
> b) on compare entre elles les dérivées ainsi calculées ;
> c) on sélectionne la dérivée, dont la loi de pilotage correspondante engendre l'ordre de pilotage de plus faible valeur absolue ; et
> d) on intègre une dérivée sélectionnée de manière à obtenir ledit ordre de pilotage selon ledit axe de pilotage.

On choisit donc la loi de pilotage, non pas en fonction de paramètres de l'aéronef, mais en fonction des résultats de chaque loi, la loi de pilotage qui engendre l'ordre le plus faible en valeur absolue (c'est-à-dire la loi la plus efficace pour atteindre l'objectif recherché) étant retenue. Cette loi correspond à la loi dont la dérivée est la plus faible.

Le fait de calculer les dérivées permet de s'affranchir du problème connu dû à la présence d'au moins un terme intégrateur dans les fonctions correspondant aux lois de pilotage. En effet, un terme intégrateur dans une loi inactive peut prendre n'importe quelle valeur et la comparaison avec une loi active n'a pas de sens. De plus, en changeant de loi, on ne sait pas à quelle valeur il convient de réinitialiser l'intégrateur. Par conséquent, en calculant préalablement les dérivées des fonctions correspondant aux différentes lois et en comparant ces dérivées, on évite les problèmes précités.

La présente invention peut être appliquée au pilotage d'un aéronef selon l'un ou simultanément plusieurs des différents axes de pilotage (axe de tangage, axe de roulis, axe de lacet, axe de commande de la poussée des moteurs) de l'aéronef.

Lorsque le pilotage se fait selon l'axe de tangage, le procédé conforme à l'invention permet un pilotage naturel, tout en contrôlant l'incidence qui ne dépasse pas l'incidence maximale autorisée, puisque l'on sélectionne la loi de pilotage qui engendre dans ce cas l'ordre le moins à cabrer.

Dans cette situation, on utilise de préférence, comme lois de pilotage, au moins une loi de protection en incidence et une loi de commande de trajectoire ou de facteur de charge (vertical).

De façon avantageuse, on calcule la dérivée de ladite loi de commande du facteur de charge vertical LoiNz, à partir de l'expression :

$$d(LoiNz)/dt = d\,[F224.(d\theta/dt) - G220.Nzc + G221.(Nz-(\cos\theta/\cos\Phi)$$

$$- ProtVmax)]/dt + F225.[Nz\text{-}lim\,(Nzc + (\cos\theta/\cos\Phi) + ProtVmax)]$$

dans laquelle :

- F224, F225, G220 et G221 sont des paramètres ;
- θ est l'assiette longitudinale de l'aéronef ;
- Φ est l'assiette latérale de l'aéronef ;
- Nz est le facteur de charge vertical effectif de l'aéronef ;
- Nzc est le facteur de charge vertical commandé ;
- ProtVmax est la valeur maximale d'une protection de la vitesse de l'aéronef ; et
- lim est une fonction de limitation.

De plus, avantageusement, on calcule la dérivée de ladite loi de protection en incidence Protα, à partir de l'expression :

$$d(Prot\alpha)/dt = d[F831.(d\theta/dt) - (CO.\alpha com) + F830. (\alpha-\alpha prot)]/dt$$
$$+ F829.[\alpha-\alpha prot-\alpha com] + lim [F833.(dV/dt)]$$

dans laquelle :

- F829, F830, F831, F833 et CO sont des paramètres ;
- α est l'angle d'incidence effectif ;
- αcom est l'angle d'incidence commandé ;
- αprot est une valeur de protection de l'angle d'incidence ;
- θ est l'assiette longitudinale ;
- V est la vitesse effective de l'aéronef ; et
- lim est une fonction de limitation.

En outre, avantageusement, lorsque ledit axe de pilotage est l'axe de tangage de l'aéronef, pour l'opération d) :

- on intègre ladite dérivée sélectionnée, dont la loi de pilotage engendre l'ordre de pilotage de plus faible valeur absolue, uniquement si cette dérivée est comprise entre une première dérivée par rapport au temps d'une protection en assiette minimale et une seconde dérivée par rapport au temps d'une protection en assiette maximale ;
- sinon, si ladite dérivée sélectionnée est inférieure à ladite première dérivée, on intègre cette dernière et si ladite dérivée sélectionnée est supérieure à ladite seconde dérivée, on intègre ladite seconde dérivée.

Ainsi, on simplifie la mise en oeuvre de l'invention, car au lieu d'avoir une protection en assiette pour chaque loi de pilotage, on a une seule protection en assiette qui agit de façon globale.
A cet effet, de façon avantageuse, on calcule :

- ladite première dérivée de protection en assiette minimale Protθmin, à partir de l'expression :

$$d(Prot\theta min)/dt = F193.[K79.(d\theta/dt) + K78.d(d\theta/dt)/dt + K76.(\theta+15)] ;$$

et
- ladite seconde dérivée de protection en assiette maximale Protθmax, à partir de l'expression :

$$d(Prot\theta max)/dt = F193.[K79.(d\theta/dt) + K78.d(d\theta/dt)/dt + K77.(\theta-30)],$$

dans lesquelles :

- F193, K76, K77, K78 et K79 sont des paramètres ; et
- θ est l'assiette longitudinale de l'aéronef.

Dans le cas d'un pilotage manuel de l'aéronef selon l'axe de tangage au moyen d'au moins un manche de commande usuel, on utilise, de façon avantageuse, comme lois de pilotage, une loi de commande du facteur de charge, une loi de protection en incidence et une loi de protection en vitesse, et l'actionnement du manche de commande est traduit simultanément en consigne de facteur de charge, en consigne d'incidence limite et en consigne de vitesse limite, qui sont utilisées respectivement par ladite loi de commande du facteur de charge, ladite loi de protection en incidence et ladite loi de protection en vitesse.

Dans ce cas, de préférence, ladite loi de protection en vitesse comporte une première loi (dite "souple") autorisant un dépassement de consigne et une seconde loi (dite "dure") n'autorisant pas de dépassement de consigne.

De plus, avantageusement, ladite première loi est une loi de protection par rapport à la vitesse maximale opérationnelle de l'aéronef et ladite seconde loi est une loi de protection par rapport à la vitesse limite structurale de l'aéronef.

La présente invention concerne également un système de pilotage d'un aéronef, qui est susceptible d'engendrer des ordres de pilotage de l'aéronef selon au moins un axe de pilotage (axe de tangage, axe de roulis, axe de lacet et/ou axe de poussée des moteurs).

Selon l'invention, ledit système de pilotage du type comportant au moins deux moyens de pilotage, chacun desdits moyens de pilotage comprenant une loi de pilotage qui est différente de celle de l'autre moyen de pilotage et qui permet de déterminer des ordres de pilotage selon ledit axe de pilotage en fonction de paramètres de l'aéronef, est remarquable en ce que chacun desdits moyens de pilotage est susceptible de calculer la dérivée par rapport au temps de la fonction qui représente la loi de pilotage correspondante et qui prend en compte les valeurs actuelles des paramètres correspondants, et en ce que ledit système de pilotage comporte de plus :

- des premiers moyens pour comparer entre elles les dérivées calculées par lesdits moyens de pilotage et pour sélectionner une dérivée ; et
- des seconds moyens pour intégrer une dérivée sélectionnée de manière à obtenir ledit ordre de pilotage selon ledit axe de pilotage.

Ainsi, grâce à l'invention, on obtient un système de pilotage efficace qui est de plus très simple, en termes de réalisation et de compréhension.

De façon avantageuse, lesdits premiers moyens comportent au moins un voteur. Dans le cadre de la présente invention, on entend par voteur un système de comparaison connu qui comprend au moins deux entrées et une sortie et qui compare à tout instant les valeurs présentes sur les entrées et fournit à la sortie l'une d'entre elles en fonction de règles prédéfinies. A titre d'illustration, un voteur peut comprendre trois entrées et une sortie et délivrer à la sortie la valeur médiane de trois valeurs introduites respectivement par lesdites trois entrées. On notera que, dans le cas de deux lois de pilotage, dont les résultats sont transmis respectivement à deux desdites entrées, on transmet alors de plus selon l'invention une valeur fixe à la troisième entrée.

En ce qui concerne l'axe de tangage, la protection par voteur ainsi réalisée permet de remplacer deux dispositifs connus utilisés : l'avance de phase et le verrouillage du manche à cabrer.

Par ailleurs, dans le cas du pilotage selon l'axe de tangage, avantageusement, ledit système de pilotage comporte des troisièmes moyens, de préférence un voteur, pour comparer une dérivée, dont la loi engendre l'ordre de pilotage à cabrer le plus faible, à des dérivées de protection en assiette minimale et maximale et pour sélectionner la dérivée présentant la valeur médiane, qui sera intégrée par lesdits seconds moyens.

En outre, de façon avantageuse, quel que soit l'axe de pilotage considéré, le système de pilotage conforme à l'invention comporte au moins un moteur dont la sortie est reliée à l'entrée d'au moins l'un desdits moyens de pilotage.

Les figures du dessin annexé feront bien comprendre comment l'invention peut être réalisée. Sur ces figures, des références identiques désignent des éléments semblables.

La figure 1 est le schéma synoptique d'un système de pilotage conforme à un premier mode de réalisation de l'invention.

Les figures 2 et 3 illustrent schématiquement des moyens de pilotage différents.

La figure 4 illustre schématiquement un moyen de calcul permettant de calculer des dérivées de protection en assiette minimale et maximale.

La figure 5 est le schéma synoptique d'un système de pilotage conforme à un second mode de réalisation de l'invention.

La figure 6 représente schématiquement une variante d'une partie du système de pilotage de la figure 4.

La figure 7 est un graphique permettant d'expliciter la variante de la figure 6.

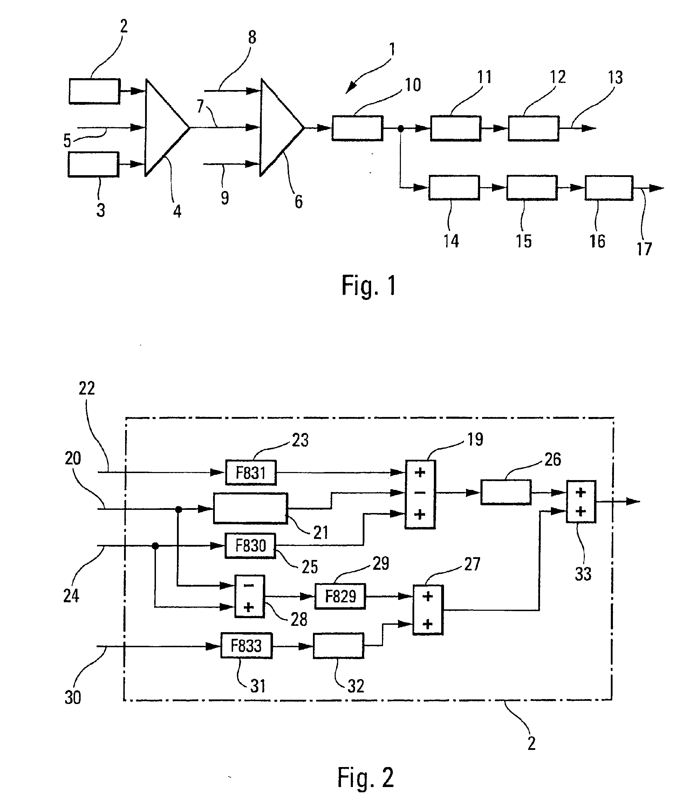

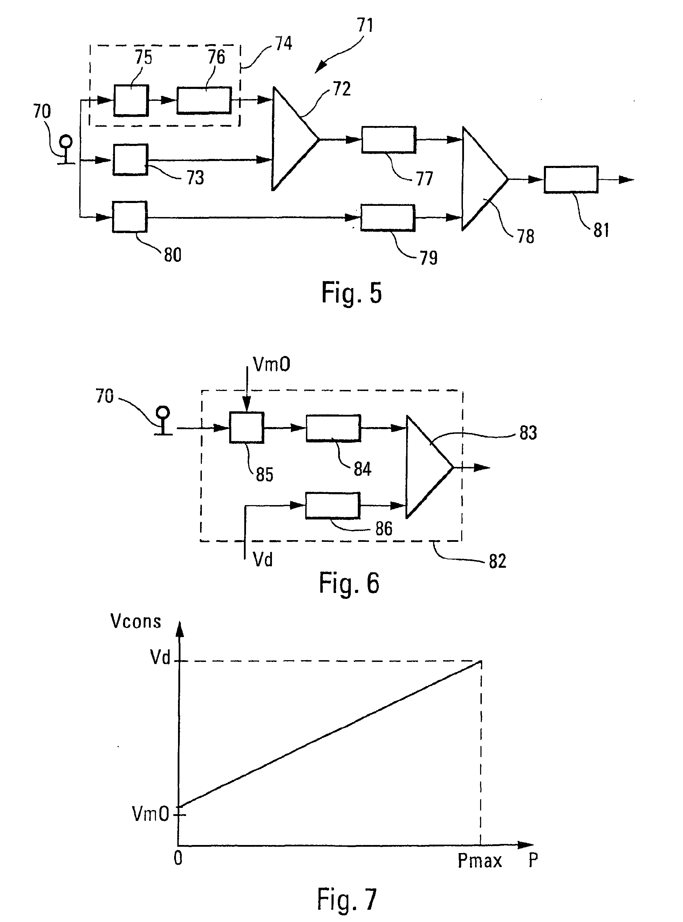

Le système 1 conforme à l'invention et représenté schématiquement sur la figure 1 est un système de pilotage d'un aéronef non représenté, en particulier un avion de transport, qui est susceptible d'engendrer des ordres de pilotage de l'aéronef selon au moins l'un des différents axes de pilotage dudit aéronef (axe de tangage, axe de roulis, axe de lacet, axe de commande de la poussée des moteurs). Dans le cadre de la présente invention, ledit système 1 peut donc piloter l'aéronef soit selon l'un, soit selon plusieurs (deux, trois, quatre) de ces axes de pilotage. Les ordres de pilotage engendrés par ledit système de pilotage 1 sont transmis, de façon usuelle, à des organes de pilotage connus de l'aéronef, tels que des gouvernes aérodynamiques par exemple. Il en est de même du système de pilotage 71 représenté sur la figure 5.

Selon l'invention, ledit système de pilotage 1 comporte au moins, pour le pilotage selon un axe de pilotage particulier :

- une pluralité de moyens de pilotage 2 et 3, chacun desdits moyens de pilotage 2 et 3 comprenant une loi de pilotage usuelle, qui est différente de celle de l'autre moyen de pilotage et qui permet de déterminer des ordres de pilotage en fonction de paramètres (vitesse, incidence, assiette, ordres du pilote, ...) de l'aéronef. Selon l'invention, chacun desdits moyens de pilotage 2 et 3 calcule la dérivée par rapport au temps de la fonction qui représente la loi de pilotage correspondante et qui prend en compte les valeurs actuelles des paramètres correspondants, comme précisé ci-dessous ;
- des moyens 4 précisés ci-après pour comparer entre elles les dérivées calculées par lesdits moyens de pilotage 2 et 3 et pour sélectionner une dérivée précisée ci-dessous ; et
- des moyens 10 pour intégrer une dérivée sélectionnée de manière à pouvoir former ledit ordre de pilotage selon ledit axe de pilotage.

Selon l'invention, les moyens 4 comprennent un voteur, de type usuel, qui comporte trois entrées et une sortie. Ledit voteur compare, entre elles, les valeurs fournies auxdites trois entrées et délivre à sa sortie la valeur médiane.

De plus, selon l'invention, ledit système 1 comporte également des moyens 6, de préférence un voteur, pour comparer la dérivée sélectionnée par le voteur 4, à des dérivées de protection en assiette minimale et maximale, reçues respectivement par des liaisons 8 et 9.

Ledit système 1 comprend de plus, de façon connue :

- pour former des ordres selon ledit axe de pilotage, dont les résultats sont transmis par une liaison 13 :

    . des moyens connus 11 de limitation d'amplitude (en °), permettant d'empêcher les gouvernes d'aller trop loin ; et
    . des moyens connus 12 de limitation de vitesse de débattement (en °/s), permettant d'empêcher les gouvernes de se déplacer trop rapidement ; et

- pour la gestion du plan :

    · des moyens d'intégration 14 ;
    . des moyens connus 15 de limitation d'amplitude ; et
    · des moyens connus 16 de limitation de vitesse de débattement, dont la sortie est liée à une liaison 17.

Bien que non exclusivement, la présente invention est particulièrement bien adaptée au pilotage selon l'axe de tangage (profondeur) de l'aéronef.

Aussi, dans les modes de réalisation préférés décrits ci-dessous, le système 1, 71 est destiné à engendrer des ordres de pilotage selon ledit axe de tangage.

Un premier mode de réalisation est représenté sur les figures 1 à 4.

Dans ce cas, de préférence, lesdits moyens 2 et 3 comprennent, respectivement, une loi de protection en incidence Prot$\alpha$ et une loi de commande de facteur de charge vertical LoiNz, précisées ci-dessous.

De plus, la troisième entrée 5 du voteur 4 reçoit :

- dans une première variante, un ordre forfaitaire à piquer de sorte que le voteur 4 choisit alors, parmi les résultats issus des moyens de pilotage 2 et 3, ceux qui engendrent l'ordre le moins à cabrer ; et
- dans une seconde variante, une loi de pilotage en vitesse, de type usuel. Ainsi, on réalise un protection en vitesse.

Selon l'invention, les moyens 2 calculent la dérivée de ladite loi de protection en incidence Prot$\alpha$, à partir de l'expression :

$$d(Prot\alpha)/dt = d[F831.(d\theta/dt) - (CO.\alpha com) + F830.(\alpha - \alpha prot)]/dt$$
$$+ F829.[\alpha - \alpha prot - \alpha com] + lim[F833.(dV/dt)]$$

dans laquelle :

- F829, F830, F831, F833 et CO sont des paramètres précisés ci-dessous ;
- $\alpha$ est l'angle d'incidence effectif de l'aéronef;
- $\alpha com$ est l'angle d'incidence commandé ;
- $\alpha prot$ est une valeur de protection de l'angle d'incidence ;
- $\theta$ est l'assiette longitudinale de l'aéronef ;
- V est la vitesse effective de l'aéronef ; et
- lim est une fonction de limitation.

Dans le cadre de la présente invention, une fonction de limitation est une fonction dont la sortie est égale à l'entrée tant qu'elle reste comprise entre un seuil maximal et un seuil minimal. Si elle est en dehors de ces limites, la sortie est limitée et reste égale au seuil atteint.

De préférence, l'expression lim[F833.(dV/dt)] a comme seuils: 20° à piquer et 2° à cabrer.

Pour ce faire, lesdits moyens de pilotage 2 comportent, comme représenté sur la figure 2 :

- un moyen de calcul 19 qui :

  . retranche le produit (formé par un moyen de calcul 21) du paramètre CO par l'angle $\alpha com$ reçu d'une liaison 20, au produit (formé par un moyen de calcul 23) du paramètre F831 par l'expression (d$\theta$/dt) reçue par une liaison 22 ; et
  . y ajoute le produit (formé par un moyen de calcul 25) du paramètre F830 par l'expression ($\alpha$-$\alpha prot$) reçue par une liaison 24 ;

- un moyen 26 pour dériver le résultat issu du moyen de calcul 19 ;
- un moyen de calcul 27 qui fait la somme :

  . du produit (formé par un moyen de calcul 29) du paramètre F829 par la différence [($\alpha$-$\alpha prot$))-$\alpha com$] calculée par un moyen de calcul 28 ; et
  . du produit (formé par un moyen de calcul 31 et limité par un moyen de calcul 32) du paramètre F833 par l'expression (dV/dt) reçue par une liaison 30 ; et

- un moyen de calcul 33 qui fait la somme des résultats issus des moyens 26 et 27.

Les paramètres F829, F830, F831 et F833 précités prennent, dans un mode de réalisation préféré, les valeurs indiquées ci-après, en fonction de la vitesse commandée VC de l'aéronef.

| VC | 0 | 100 | 125 | 180 | 210 | 250 | 300 | 350 |
|---|---|---|---|---|---|---|---|---|
| F829 | 1,6 | 1,6 | 1,6 | 1,48 | 0,9 | 1 | 1 | 1 |

| VC | 0 | 100 | 125 | 180 | 210 | 250 | 300 | 350 |
|---|---|---|---|---|---|---|---|---|
| F830 | 3,8 | 3,8 | 2,9 | 0,92 | 1,2 | 1 | 0,95 | 0,8 |

| VC | 0 | 100 | 125 | 180 | 210 | 250 | 300 | 350 |
|---|---|---|---|---|---|---|---|---|
| F831 | 3,28 | 3,28 | 2,68 | 1,09 | 1,4 | 1,15 | 1 | 0,75 |

| VC | 0 | 100 | 125 | 180 | 210 | 250 | 300 | 350 |
|---|---|---|---|---|---|---|---|---|
| F833 | 6 | 6 | 6 | 4,5 | 2 | 1,2 | 0 | 0 |

De plus, le paramètre CO prend les valeurs suivantes selon les cas X (centrage avant de l'aéronef) et Y (centrage arrière de l'aéronef).

| VC | 0 | 130 | 200 | 250 | 300 | 350 |
|---|---|---|---|---|---|---|
| X | - 8,86 | - 8,86 | -5,88 | - 4,86 | - 3,55 | - 3,12 |
| Y | - 4,96 | - 4,968 | - 2,97 | - 2,07 | -1,80 | -1,71 |

De plus, selon l'invention, les moyens 3 calculent la dérivée de ladite loi de commande du facteur de charge vertical LoiNz, à partir de l'expression :

$$d(LoiNz)dt = d\,[F224.(d\theta/dt) - G220.Nzc + G221.(Nz\text{-}(cos\theta/cos\Phi)$$

$$- ProtVmax)]/dt + F225.[Nz.lim\,(Nzc + (cos\theta/cos\Phi) + ProtVmax)]$$

dans laquelle :

- F224, F225, F220 et G221 sont des paramètres précisés ci-dessous ;
- θ est l'assiette longitudinale de l'aéronef ;
- Φ est l'assiette latérale de l'aéronef ;
- Nz est le facteur de charge vertical effectif de l'aéronef ;
- Nzc est le facteur de charge vertical commandé ;
- ProtVmax est la valeur maximale de protection de la vitesse de l'aéronef ; et
- lim est une fonction de limitation.

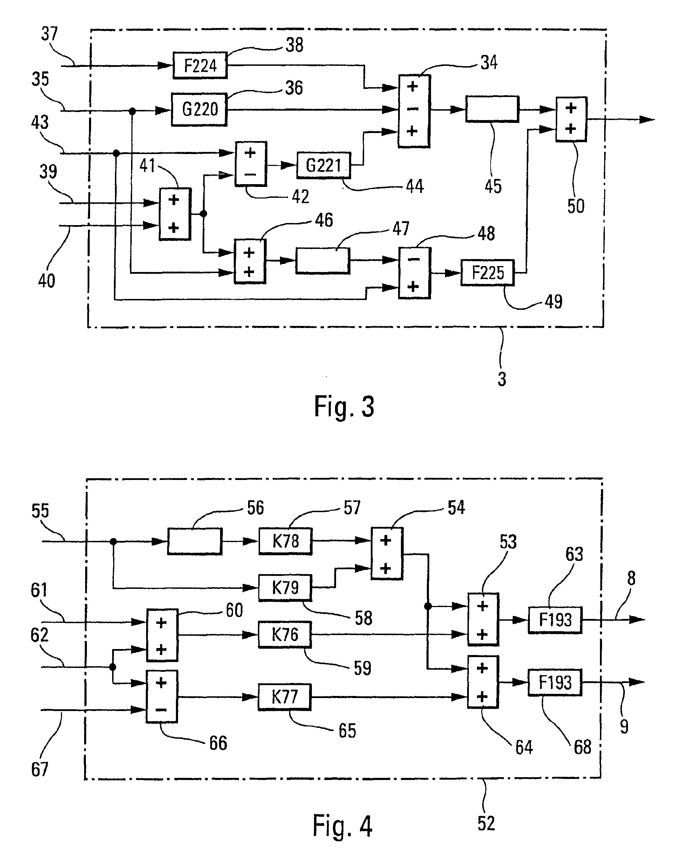

A titre d'exemple, l'expression lim(Nzc + (cosθ/cosΦ) + ProtVmax) a comme seuils : -1 g (piquer) et 2,5 g (cabrer).
Pour ce faire, lesdits moyens de pilotage 3 comportent, comme représenté sur la figure 3 :

- un moyen de calcul 34 qui :

  . retranche le produit (formé par un moyen de calcul 36) du paramètre G220 par le facteur de charge vertical commandé Nzc reçu par une liaison 35, au produit (formé par un moyen de calcul 38) du paramètre F224 par l'expression (dθdt) reçue par une liaison 37 ; et
  . y ajoute le produit (formé par un moyen de calcul 44) du paramètre G221 par la différence (formée par un moyen de calcul 42) entre, d'une part, le facteur de charge vertical effectif Nz (reçu par une liaison 43) et, d'autre part, la somme (formée par un moyen de calcul 41) des expressions (cosθ/cosΦ) et (ProtVmax) reçues respectivement par des liaisons 39 et 40 ;

- un moyen 45 pour dériver le résultat issu du moyen de calcul 34 ;
- un moyen de calcul 48 qui fait la différence entre le facteur de charge vertical effectif Nz et la somme (Nzc + (cosθ/cosΦ) + ProtVmax) calculée par un moyen de calcul 46 et limitée par un moyen de limitation 47 ;
- un moyen de calcul 49 pour multiplier le résultat issu du moyen 48 par le paramètre F225 ; et
- un moyen de calcul 50 qui fait la somme des résultats issus des moyens 45 et 49.

On indique ci-après des valeurs préférées des paramètres F224, F225, G220 (selon les cas X et Y) et G221 (selon les cas X et Y).

| VC | 0 | 120 | 130 | 160 | 190 | 210 | 280 | 350 |
|---|---|---|---|---|---|---|---|---|
| F224 | 2,2 | 2,2 | 1,9 | 1,35 | 1,05 | 0,58 | 0,45 | 0,41 |

| VC | 0 | 120 | 130 | 160 | 190 | 210 | 280 | 350 |
|---|---|---|---|---|---|---|---|---|
| F225 | 15 | 15 | 13 | 10 | 7,5 | 3,8 | 2,9 | 2,71 |

| VC | 0 | 130 | 200 | 250 | 300 | 350 |
|---|---|---|---|---|---|---|
| X | - 8,86 | - 8,86 | - 5,88 | - 4,86 | - 3,55 | - 3,12 |
| Y | -4,96 | - 4,968 | - 2,97 | - 2,07 | - 1,80 | -1,71 |

| VC | 120 | 130 | 150 | 190 | 210 | 320 |
|---|---|---|---|---|---|---|
| X | 14 | 8,2 | 4,6 | 3,5 | 0,51 | 0,05 |
| Y | 23 | 17 | 12 | 8 | 5 | 2 |

Le système 1 comporte, de plus, une unité de calcul 52 qui calcule :

- ladite première dérivée de protection en assiette minimale Protθmin qui est transmise par la liaison 8 au voteur 6, à partir de l'expression :

$$d(Prot\theta min)/dt = F193.[K79.(d\theta/dt) + K78.d(d\theta/dt)/dt + K76.(\theta+15)] ;$$

et

- ladite seconde dérivée de protection en assiette maximale Protθmax qui est transmise par la liaison 9 au voteur 6, à partir de l'expression :

$$d(Prot\theta max)/dt = F193.[K79.(d\theta/dt) + K78.d(d\theta/dt)/dt + K77.(\theta-30)].$$

Les paramètres K76 et K77 valent 0,5 et les paramètres K78 et K79 valent respectivement 1 et 1,5.
Quant au paramètre F193, il prend les valeurs suivantes, en fonction de la vitesse commandée VC de l'aéronef.

| VC | 0 | 120 | 130 | 160 | 190 | 210 | 280 | 350 |
|---|---|---|---|---|---|---|---|---|
| F193 | 2,2 | 2,2 | 1,9 | 1,35 | 1,05 | 0,58 | 0,45 | 0,41 |

Comme on peut le voir sur la figure 4, l'unité de calcul 52 comporte, pour ce faire :

- un moyen de calcul 53 qui fait la somme :

. d'une somme (formée par un moyen de calcul 54), d'une part, du produit (formé par un moyen de calcul 57) du paramètre K78 par la dérivée (formée par un moyen de calcul 56) de l'expression (dθ/dt) (reçue par une liaison 55) et, d'autre part, du produit (formé par un moyen de calcul 58) du paramètre K79 par cette expression ; et
. du produit (formé par un moyen de calcul 59) du paramètre K76 par une somme (formée par un moyen de calcul 60) de la valeur 15 et de θ reçus respectivement par des liaisons 61 et 62;

- un moyen de calcul 63 qui multiplie le résultat issu du moyen de calcul 53 par le paramètre F193 pour obtenir ladite première dérivée à transmettre par la liaison 8 ;
- un moyen de calcul 64 qui fait la somme :

. du résultat issu du moyen de calcul 54 ; et
. du produit (formé par un moyen de calcul 65) du paramètre K77 par la différence (formée par un moyen de calcul 66) entre θ et la valeur 30 (reçue par une liaison 67) ; et

- un moyen de calcul 68 qui multiplie le résultat issu du moyen de calcul 64 par le paramètre F193 pour obtenir ladite seconde dérivée à transmettre par la liaison 9.

On notera qu'ainsi les moyens 10 intègrent la dérivée sélectionnée par le voteur 4, dont la loi de pilotage engendre l'ordre de pilotage à cabrer le plus faible, uniquement si cette dérivée est comprise entre la (première) dérivée par rapport au temps de la protection en assiette minimale Protθmin et la (seconde) dérivée par rapport au temps de la protection en assiette maximale Protθmax. Sinon, si la dérivée sélectionnée par le voteur 4 est inférieure à ladite première dérivée, les moyens 10 intègrent cette dernière et si la dérivée sélectionnée est supérieure à ladite seconde dérivée, les moyens 10 intègrent ladite seconde dérivée.

Le système de pilotage 1 conforme à l'invention peut être intégré dans un dispositif de commande de vol électrique usuel. Dans ce cas, on remplace les logiques de commutation usuelles "loiNz" ⇔ "Protα" par un vote permanent entre les différentes lois pouvant entrer en jeu. Ce vote se fait donc en deux étapes : d'abord sélection de l'ordre le moins à cabrer entre les lois "loiNz" et "Protα" pour ne pas dépasser l'incidence maximale αmax, puis limitation de l'ordre résultant par deux assiettes, à cabrer et à piquer. L'architecture du système 1 est donc très simple en termes de réalisation et de compréhension.

De plus, grâce à l'invention, on obtient notamment les avantages suivants :

- le système 1 est efficace et peu coûteux ;
- ledit système 1 ne nécessite pas :

    . une réinitialisation d'un intégrateur au passage d'une loi de pilotage à une autre ;
    . une logique de commutation d'une loi de pilotage vers l'autre ; et
    . un double jeu de gains en protection d'incidence ;

- l'élaboration d'une protection d'assiette (moyens 6 et 52) commune aux différentes lois ;
- l'élimination de deux dispositifs spécifiques : l'avance de phase et le verrouillage du manche à cabrer ; et
- un pilotage naturel, avec un contrôle de l'incidence.

Un second mode de réalisation du système de pilotage 71 conforme à l'invention, qui est représenté sur la figure 5, est adapté au pilotage manuel de l'aéronef au moyen d'un manche de commande 70 usuel (minimanche, palonnier, ...), qui peut être actionné par un pilote de l'aéronef.

Ledit système de pilotage 71 comporte un voteur 72 qui reçoit en entrées :

- d'une part, une consigne de facteur de charge reçue d'un moyen 73 qui déduit cette consigne à partir de l'amplitude de l'actionnement (braquage) dudit manche de commande 70 ; et
- d'autre part, une valeur de facteur de charge Nzpvit reçue d'un moyen 74 qui comprend :

    . un moyen 75 qui déduit une consigne de vitesse Vt à partir de l'amplitude de l'actionnement (braquage) dudit manche de commande 70 ; et
    . un moyen de pilotage 76 qui comprend une loi de protection en vitesse (permettant de limiter la vitesse de l'aéronef lors d'une manoeuvre à piquer) et qui calcule, à partir de cette consigne de vitesse Vt, la valeur de facteur de charge Nzpvit qui est transmise audit voteur 72.

Ledit moyen de pilotage 76 calcule ladite valeur de facteur de charge Nzpvit, à partir des relations suivantes :

$$Nzpvit = Nzeq + \Delta Nzpvit$$

avec

$$\begin{cases} Nzeq = \cos\theta / \cos\varphi \\ \Delta Nzpvit = Kp.(V - Vt) + Kd.(dV / dt) \end{cases}$$

dans lesquelles relations :

- $\theta$ est l'angle d'assiette longitudinale (tangage) de l'aéronef ;
- $\varphi$ est l'angle d'assiette latérale (roulis) de l'aéronef ;
- V est la vitesse air usuelle de l'aéronef ; et

- Kp et Kd sont deux coefficients prédéterminés.

Le voteur 72 fournit en sortie la plus grande des deux valeurs présentes sur ses entrées. La valeur de cette sortie est donc supérieure ou égale à ladite valeur Nzpvit, ce qui permet d'atteindre l'objectif de limiter la vitesse de l'aéronef en dessous d'une valeur maximale Vmax. En effet, lors d'une manoeuvre à piquer, le signe du facteur de charge Nz est par convention négatif, alors qu'il est positif lors d'une manoeuvre à cabrer. La protection en vitesse ayant pour effet de limiter la manoeuvre à piquer, il est donc nécessaire de prendre en compte la plus grande des deux valeurs présentes aux entrées du voteur 72.

La sortie du voteur 72 est reliée à un moyen de pilotage 77 qui comporte une loi de commande de facteur de charge, et dont la sortie est reliée à une première entrée d'un voteur 78. Ce voteur 78 est relié par une seconde entrée à la sortie d'un moyen de pilotage 79 qui comporte une loi de protection en incidence. Ce moyen de pilotage 79 reçoit en entrée, par un moyen 80, une consigne issue du manche de commande 70 et traduite en terme d'angle d'incidence $\alpha$ par ce moyen 80. La sortie dudit moyen de pilotage 79 fournit une valeur de vitesse de gouverne telle que la mise en oeuvre de cette dernière conduise à un angle d'incidence de l'aéronef qui est inférieur ou égal à une valeur maximale $\alpha$max.

Le voteur 78 fournit en sortie la plus grande des deux valeurs présentes sur ses entrées. La valeur de cette sortie est donc supérieure ou égale à la consigne de protection en incidence, ce qui permet d'atteindre l'objectif de l'imiter l'angle d'incidence de l'aéronef en dessous de la valeur $\alpha$max, En effet, par convention, les braquages de la gouverne de profondeur sont notés avec un signe positif lors d'une action à piquer et avec un signe négatif lors d'une action à cabrer. La protection en incidence ayant pour effet de limiter une action à cabrer, il est donc nécessaire de prendre en compte la plus grande des deux valeurs présentes aux entrées du voteur 78. La sortie du voteur 78, exprimée en terme de vitesse de la gouverne de profondeur, est envoyée vers une entrée d'un intégrateur 81 qui est semblable au moyen 10 de la figure 1. La sortie de cet intégrateur 81 est représentative de la position de la gouverne de profondeur et constitue une commande de cette dernière.

Le système de pilotage 71 permet donc d'atteindre les objectifs fixés de limitation de l'angle d'incidence et de la vitesse de l'aéronef. Il est avantageux, car il fait appel à des voteurs 72, 78 qui comparent à tout instant des valeurs présentes sur leurs entrées, lesdites valeurs étant basées notamment sur différentes lois de pilotage calculées de façon simultanée, de telle façon que la sortie de chaque voteur 72, 78 évolue continuement au cours du temps. Cela permet de résoudre un problème existant sur des systèmes de pilotage usuels, à savoir la présence de discontinuités de la consigne envoyée à une gouverne lors du basculement d'une première loi de pilotage vers une seconde loi de pilotage.

Dans le mode de réalisation préféré représenté sur la figure 5, l'actionnement (braquage) du manche de commande 70 est donc traduit simultanément en consignes de facteur de charge de vitesse limite et d'angle d'incidence limite, respectivement par lesdits moyens 73, 75 et 80. Ainsi, l'aéronef étant en régime stabilisé, une variation de la position du manche de commande 70 est interprétée comme une variation de la consigne de facteur de charge. De même, elle est interprétée, par la loi de protection en vitesse comme une variation de la consigne de vitesse limite, et par la protection d'incidence comme une variation de la consigne d'angle d'incidence limite. A un instant donné, une seule loi de pilotage étant sélectionnée du fait de l'utilisation des voteurs 72 et 78, on peut considérer la consigne issue du manche de commande 70 selon une seule unité, à savoir celle correspondant à l'entrée de la loi de pilotage sélectionnée.

Dans un mode de réalisation particulier, le moyen 74 peut être remplacé, dans le système de pilotage 71 de la figure 5, par un moyen 82 représenté sur la figure 6. Ce moyen 82 comporte un voteur 83 permettant de prendre en compte la plus contraignante des deux lois de pilotage suivantes :

- une loi de protection par rapport à la vitesse maximale opérationnelle de l'aéronef VmO, mise en oeuvre par un moyen de pilotage 84 sous la forme d'un asservissement sur une consigne de vitesse supérieure ou égale à Vm0. Cette consigne, qui est une fonction de la position du manche de commande 70, est délivrée par un moyen 85, lequel reçoit en entrée ladite position du manche de commande 70, ainsi que la valeur de Vm0. Les coefficients Kp et Kd précités, correspondant à cette loi, sont choisis de telle sorte que cette protection soit appliquée de façon "souple" ou non impérative (c'est-à-dire en autorisant un dépassement), car l'aéronef doit pouvoir voler à la vitesse Vm0 sans activation intempestive de ladite protection ; et

- une loi de protection par rapport à la vitesse limite structurale Vd, mise en oeuvre par un moyen de pilotage 86. Cette loi reçoit comme consigne ladite vitesse Vd. Cette loi de protection limite les manoeuvres à piquer de l'aéronef. La vitesse Vd ne doit jamais être dépassée. Son dépassement pourrait en effet conduire à une rupture de la cellule de l'aéronef. Les coefficients Kp et Kd correspondant à cette loi sont donc choisis de telle sorte que cette protection soit appliquée de façon "dure" ou impérative, c'est-à-dire sans dépassement possible de la consigne.

Dans un mode de réalisation préféré de l'invention, le moyen 85 assurant la traduction en vitesse de la position du manche de commande 70 est tel que la consigne de vitesse Vcons, qui est présente en sortie dudit moyen 85 et qui dépend de la position P du manche de commande 70, corresponde à Vm0 ou à une valeur sensiblement supérieure à Vm0 lorsque le manche de commande 70 est à la position de repos, et corresponde à une vitesse au plus égale à Vd lorsque ledit manche de commande 70 est à la position extrême Pmax lors d'une manoeuvre à piquer (figure 7).

On notera que l'invention a été décrite en considérant des valeurs de vitesse (consigne de vitesse Vt, vitesse maximale opérationnelle Vm0, vitesse limite structurale Vd, ...). Il est également possible de prendre en considération des valeurs de Mach comme paramètres d'entrée du système de pilotage 1, une transformation usuelle desdites valeurs de Mach permettant d'obtenir les vitesses correspondantes.

**Revendications**

1. Procédé de pilotage d'un aéronef, destiné à engendrer des ordres de pilotage dudit aéronef selon au moins un axe de pilotage, procédé selon lequel on utilise au moins deux lois de pilotage différentes, relatives audit axe de pilotage et permettant chacune de déterminer des ordres de pilotage en fonction de paramètres de l'aéronef, **caractérisé en ce que**, pour ledit axe de pilotage, on réalise, de façon automatique et répétitive, les opérations suivantes :

   a) pour chacune desdites lois de pilotage, on calcule la dérivée par rapport au temps de la fonction qui correspond à ladite loi de pilotage et qui prend en compte les valeurs actuelles des paramètres correspondants ;
   b) on compare entre elles les dérivées ainsi calculées ;
   c) on sélectionne la dérivée, dont la loi de pilotage correspondante engendre l'ordre de pilotage de plus faible valeur absolue ; et
   d) on intègre une dérivée sélectionnée de manière à obtenir ledit ordre de pilotage selon ledit axe de pilotage.

2. Procédé selon la revendication 1,
   **caractérisé en ce que** ledit axe de pilotage est l'axe de tangage de l'aéronef.

3. Procédé selon la revendication 2,
   **caractérisé en ce que** l'on utilise, comme lois de pilotage, au moins une loi de protection en incidence et une loi de commande du facteur de charge vertical.

4. Procédé selon la revendication 3,
   **caractérisé en ce que** l'on calcule la dérivée de ladite loi de commande du facteur de charge vertical LoiNz, à partir de l'expression :

$$d(LoiNz)/dt = d\,[F224.(d\theta/dt) - G220.Nzc + G221.(Nz\text{-}(\cos\theta/\cos\Phi)$$
$$- ProtVmax)]/dt + F225.[Nz\text{-}lim\,(Nzc + (\cos\theta/\cos\Phi) + ProtVmax)]$$

   dans laquelle :

   - F224, F225, G220 et G221 sont des paramètres ;
   - $\theta$ est l'assiette longitudinale de l'aéronef ;
   - $\Phi$ est l'assiette latérale de l'aéronef ;
   - Nz est le facteur de charge vertical effectif de l'aéronef ;
   - Nzc est le facteur de charge vertical commandé ;
   - ProtVmax est la valeur maximale d'une protection de la vitesse de l'aéronef ; et
   - lim est une fonction de limitation.

5. Procédé selon l'une des revendications 3 et 4,
   **caractérisé en ce que** l'on calcule la dérivée de ladite loi de protection en incidence Prot$\alpha$, à partir de l'expression :

$$d(Prot\alpha)/dt = d[F831.(d\theta/dt) - (CO.\alpha com) + F830.\,(\alpha\text{-}\alpha prot)]/dt$$
$$+ F829.[\alpha\text{-}\alpha prot\text{-}\alpha com] + lim\,[F833.(dV/dt)]$$

dans laquelle :

- F829, F830, F831, F833 et CO sont des paramètres ;
- $\alpha$ est l'angle d'incidence effectif de l'aéronef ;
- $\alpha$com est l'angle d'incidence commandé ;
- $\alpha$prot est une valeur de protection de l'angle d'incidence ;
- $\theta$ est l'assiette longitudinale de l'aéronef ;
- V est la vitesse effective de l'aéronef ; et
- lim est une fonction de limitation.

6. Procédé selon l'une des revendications 1 à 5,
**caractérisé en ce que** ledit axe de pilotage est l'axe de tangage de l'aéronef et **en ce que**, pour l'opération d) :

- on intègre ladite dérivée sélectionnée, dont la loi de pilotage engendre l'ordre de pilotage de plus faible valeur absolue, uniquement si cette dérivée est comprise entre une première dérivée par rapport au temps d'une protection en assiette minimale et une seconde dérivée par rapport au temps d'une protection en assiette maximale ;
- sinon, si ladite dérivée sélectionnée est inférieure à ladite première dérivée, on intègre cette dernière et si ladite dérivée sélectionnée est supérieure à ladite seconde dérivée, on intègre ladite seconde dérivée.

7. Procédé selon la revendication 6,
**caractérisé en ce que** l'on calcule :

- ladite première dérivée de protection en assiette minimale Prot$\theta$min, à partir de l'expression :

$$d(Prot\theta min)/dt = F193.[K79.(d\theta/dt) + K78.d(d\theta/dt)/dt + K76.(\theta + 15)] ;$$

et
- ladite seconde dérivée de protection en assiette maximale Prot$\theta$max, à partir de l'expression :

$$d(Prot\theta max)/dt = F193.[K79.(d\theta/dt) + K78.d(d\theta/dt)/dt + K77.(\theta-30)],$$

dans lesquelles :

- F193, K76, K77, K78 et K79 sont des paramètres ; et
- $\theta$ est l'assiette longitudinale de l'aéronef.

8. Procédé selon la revendication 3, pour un pilotage manuel de l'aéronef au moyen d'au moins un manche de commande (70),
**caractérisé en ce que** l'on utilise de plus, comme loi de pilotage, une loi de protection en vitesse, et **en ce que** l'actionnement du manche de commande (70) est traduit simultanément en consigne de facteur de charge, en consigne d'incidence limite et en consigne de vitesse limite, qui sont utilisées respectivement par ladite loi de commande du facteur de charge, ladite loi de protection en incidence et ladite loi de protection en vitesse.

9. Procédé selon la revendication 8,
**caractérisé en ce que** ladite loi de protection en vitesse comporte une première loi autorisant un dépassement de consigne et une seconde loi n'autorisant pas de dépassement de consigne.

10. Procédé selon la revendication 9,
**caractérisé en ce que** ladite première loi est une loi de protection par rapport à une vitesse maximale opérationnelle (Vm0) de l'aéronef et ladite seconde loi est une loi de protection par rapport à une vitesse limite structurale (Vd) de l'aéronef.

11. Procédé selon la revendication 1,

**caractérisé en ce que** ledit axe de pilotage est l'axe de roulis de l'aéronef.

12. Procédé selon la revendication 1,
    **caractérisé en ce que** ledit axe de pilotage est l'axe de lacet de l'aéronef.

13. Procédé selon la revendication 1,
    **caractérisé en ce que** ledit axe de pilotage est l'axe de commande de la poussée des moteurs de l'aéronef.

14. Système de pilotage d'un aéronef, susceptible d'engendrer des ordres de pilotage dudit aéronef selon au moins un axe de pilotage, ledit système (1) comportant au moins deux moyens de pilotage (2, 3, 76, 77, 79, 84, 86), chacun desdits moyens de pilotage (2, 3, 76, 77, 79, 84, 86) comprenant une loi de pilotage qui est différente de celle de l'autre moyen de pilotage et qui permet de déterminer des ordres de pilotage selon ledit axe de pilotage en fonction de paramètres de l'aéronef,
    **caractérisé en ce que** chacun desdits moyens de pilotage (2, 3, 76, 77, 79, 84, 86) est susceptible de calculer la dérivée par rapport au temps de la fonction qui représente la loi de pilotage correspondante et qui prend en compte les valeurs actuelles des paramètres correspondants, et **en ce que** ledit système de pilotage (1) comporte de plus :

    - des premiers moyens (4, 78) pour comparer entre elles les dérivées calculées par lesdits moyens de pilotage (2, 3, 76, 77, 79, 84, 86) et pour sélectionner une dérivée ; et
    - des seconds moyens (10, 81) pour intégrer une dérivée sélectionnée de manière à obtenir ledit ordre de pilotage selon ledit axe de pilotage.

15. Système selon la revendication 14,
    **caractérisé en ce que** lesdits premiers moyens comportent au moins un voteur (4, 78).

16. Système selon l'une des revendications 15 et 16, ledit axe de pilotage étant l'axe de tangage,
    **caractérisé en ce qu'**il comporte des troisièmes moyens (6) pour comparer une dérivée, dont la loi engendre l'ordre de pilotage à cabrer le plus faible, à des dérivées de protection en assiette minimale et maximale et pour sélectionner la dérivée présentant la valeur médiane, qui sera intégrée par lesdits seconds moyens (10).

17. Système selon la revendication 16,
    **caractérisé en ce que** lesdits troisièmes moyens comportent au moins un voteur (6).

18. Système selon l'une quelconque des revendications 14 à 17,
    **caractérisé en ce qu'**il comporte, de plus, au moins un moteur (72) dont la sortie est reliée à l'entrée d'au moins l'un desdits moyens de pilotage (77).

19. Aéronef,
    **caractérisé en ce qu'**il comporte un système de pilotage (1) tel que celui spécifié sous l'une quelconque des revendications 14 à 18.


**Patentansprüche**

1. Flugzeugsteuerungsverfahren, das dazu bestimmt ist, Befehle zur Steuerung des Flugzeuges um wenigstens eine Steuerachse zu erzeugen, wobei man wenigstens zwei unterschiedliche Steuerbarkeitsgesetze verwendet, die sich auf die Steuerachse beziehen und es jeweils erlauben, in Abhängigkeit von Parametern des Flugzeuges Steuerbefehle zu bestimmen, **dadurch gekennzeichnet, dass** man automatisch und im Wiederholungsverfahren die folgenden Schritte ausführt:

    a) für jedes der Steuerbarkeitsgesetze berechnet man die Ableitung nach der Zeit der Funktion, die dem Steuerbarkeitsgesetz entspricht, und welche die aktuellen Werte der zugehörigen Parameter berücksichtigt;
    b) man vergleicht die so berechneten Ableitungen miteinander;
    c) man wählt die Ableitung, deren zugehöriges Steuerbarkeitsgesetz den Steuerbefehl mit dem kleinsten Absolutwert erzeugt; und
    d) man integriert eine Ableitung, die so gewählt wird, dass man den Steuerbefehl um die Steuerachse erhält.

2. Verfahren nach Anspruch 1,

**dadurch gekennzeichnet, dass** die Steuerachse die Nickachse des Flugzeuges ist.

3. Verfahren nach Anspruch 2,
**dadurch gekennzeichnet, dass** man als Steuerbarkeitsgesetz wenigstens ein Gesetz zur Sicherung des Anstellwinkels und eine Vorgabefunktion des vertikalen Lastvielfache verwendet.

4. Verfahren nach Anspruch 3,
**dadurch gekennzeichnet, dass** man die Ableitung der Vorgabefunktion des vertikalen Lastvielfachen LoiNz mit Hilfe des folgenden Ausdrucks berechnet:

$$d(LoiNz)/dt = d\,[F224.(d\theta/dt) - G220.Nzc + G221\,.(Nz-(cos\theta/cos\varphi) - ProtVmax)]/dt + F225.$$
$$[Nz\text{-}lim\,(Nzc+(cos\theta/cos\varphi) + ProtVmax)]$$

wobei:

- F224, F225, G220 und G221 Parameter sind;
- $\theta$ die Längstrimmung des Flugzeuges ist;
- $\varphi$ die Seitentrimmung des Flugzeuges ist;
- Nz das effektive vertikale Lastvielfache des Flugzeuges ist;
- Nzc das eingestellte vertikale Lastvielfache ist;
- ProtVmax der höchstzulässige Wert einer Sicherung der Flugzeuggeschwindigkeit ist; und
- lim eine Begrenzungsfunktion ist.

5. Verfahren nach einem der Ansprüche 3 und 4,
**dadurch gekennzeichnet, dass** man die Ableitung des Gesetzes für die Sicherung des Anstellwinkels Prot$\alpha$ mit Hilfe des folgenden Ausdrucks berechnet:

$$d(Prot\alpha)/dt = d[F831.(d\theta/dt) - (CO.\,\alpha\,com) + F830.(\,\alpha - \alpha\,prot)]/dt + F829.[\,\alpha - \alpha\,prot\text{-}\,\alpha com]$$
$$+ lim\,[F833.(dV/dt)]$$

wobei:

- F829, F830, F831, F833 und CO Parameter sind;
- $\alpha$ der effektive Anstellwinkel des Flugzeuges ist;
- $\alpha com$ der eingestellte Anstellwinkel ist;
- $\alpha prot$ ein Wert zur Sicherung des Anstellwinkels ist;
- $\theta$ die Längstrimmung des Flugzeuges ist;
- V die effektive Geschwindigkeit des Flugzeuges ist; und
- lim eine Begrenzungsfunktion ist.

6. Verfahren nach einem der Ansprüche 1 bis 5,
**dadurch gekennzeichnet, dass** die Steuerachse die Nickachse des Flugzeuges ist, und dass man für Schritt d):

- die gewählte Ableitung, deren Steuerbarkeitsgesetz den Steuerbefehl mit dem kleinsten Absolutwert erzeugt, ausschließlich dann integriert, wenn diese Ableitung zwischen einer ersten Ableitung nach der Zeit einer Sicherung der Minimaltrimmung und einer zweiten Ableitung nach der Zeit einer Sicherung der Maximaltrimmung liegt;
- andernfalls, wenn die gewählte Ableitung kleiner ist als die erste Ableitung, integriert man diese zuletzt genannte, und wenn die gewählte Ableitung größer ist als die zweite Ableitung, integriert man die zweite Ableitung.

7. Verfahren nach Anspruch 6,
**dadurch gekennzeichnet, dass** man Folgendes berechnet:

- die erste Ableitung der Sicherung der Minimaltrimmung Prot$\theta$min mit Hilfe des Ausdrucks:

$$d(Prot\theta min)/dt = F193.[K79.(d\theta/dt) + K78.d(d\theta/dt)/dt + K76.(\theta+15)];$$

und

- die zweite Ableitung der Sicherung der Maximaltrimmung Prot$\theta$max mit Hilfe des Ausdrucks:

$$d(Prot\theta max)/dt = F193.[K79.(d\theta/dt) + K78.d(d\theta/dt)/dt + K77.(\theta-30)],$$

wobei:

- F193, K76, K77, K78 und K79 Parameter sind; und
- $\theta$ die Längstrimmung des Flugzeuges ist.

8. Verfahren nach Anspruch 3, für eine manuelle Steuerung des Flugzeuges mit Hilfe eines Steuerknüppels (70), **dadurch gekennzeichnet, dass** man ferner als Steuerbarkeitsgesetz ein Gesetz zur Sicherung der Geschwindigkeit verwendet, und dass die Betätigung des Steuerknüppels (70) gleichzeitig ausgedrückt wird als Sollwert für das Lastvielfache, als Sollwert für den Grenzanstellwinkel und als Sollwert für die Grenzgeschwindigkeit, die von der Vorgabefunktion des Lastvielfachen, dem Gesetz zur Sicherung des Anstellwinkels beziehungsweise dem Gesetz zur Sicherung der Geschwindigkeit verwendet werden.

9. Verfahren nach Anspruch 8, **dadurch gekennzeichnet, dass** das Gesetz zur Sicherung der Geschwindigkeit ein erstes Gesetz aufweist, welches das Überschreiten des Sollwertes zulässt, und ein zweites Gesetz, das kein Überschreiten des Sollwertes zulässt.

10. Verfahren nach Anspruch 9, **dadurch gekennzeichnet, dass** das erste Gesetz ein Gesetz zur Sicherung in Bezug auf die höchstzulässige Betriebsgeschwindigkeit (Vm0) des Flugzeuges ist, und das zweite Gesetz ein Gesetz zur Sicherung in Bezug auf die konstruktionsbedingte Grenzgeschwindigkeit (Vd) des Flugzeuges ist.

11. Verfahren nach Anspruch 1, **dadurch gekennzeichnet, dass** die Steuerachse die Rollachse des Flugzeuges ist.

12. Verfahren nach Anspruch 1, **dadurch gekennzeichnet, dass** die Steuerachse die Gierachse des Flugzeuges ist.

13. Verfahren nach Anspruch 1, **dadurch gekennzeichnet, dass** die Steuerachse die Achse zur Steuerung des Triebwerksschubs ist.

14. Flugzeugsteuerungssystem, das in der Lage ist, Befehle zur Steuerung des Flugzeuges um wenigstens eine Steuerachse zu erzeugen, wobei das System (1) wenigstens zwei Steuermittel (2, 3, 76, 77, 79, 84, 86) aufweist, wobei jedes dieser Steuermittel (2, 3, 76, 77, 79, 84, 86) ein Steuerbarkeitsgesetz umfasst, das sich von jenem des anderen Steuermittels unterscheidet, und das es erlaubt, Befehle zur Steuerung um die Steuerachse in Abhängigkeit von Parametern des Flugzeuges zu bestimmen, **dadurch gekennzeichnet, dass** jedes der Steuermittel (2, 3, 76, 77, 79, 84, 86) in der Lage ist, die Ableitung nach der Zeit der Funktion zu berechnen, die das entsprechende Steuerbarkeitsgesetz darstellt, und das die aktuellen Werte der zugehörigen Parameter berücksichtigt, und dass das Steuerungssystem (1) ferner Folgendes aufweist:

- erste Mittel (4, 78), um die von den Steuermitteln (2, 3, 76, 77, 79, 84, 86) berechneten Ableitungen miteinander zu vergleichen und um eine Ableitung zu wählen; und
- zweite Mittel (10, 81), um eine Ableitung zu integrieren, die so gewählt wird, dass man den Befehl zur Steuerung um die Steuerachse erhält.

15. System nach Anspruch 14, **dadurch gekennzeichnet, dass** die ersten Mittel wenigstens einen Voter (4, 78) aufweisen.

**16.** System nach einem der Ansprüche 15 und 16, wobei die Steuerachse die Nickachse ist, **dadurch gekennzeichnet, dass** es dritte Mittel (6) aufweist, um eine Ableitung, deren Gesetz den Befehl für die schwächste Hochziehbewegung erzeugt, mit Ableitungen der Sicherung der Minimal- und Maximaltrimmung zu vergleichen, und um die Ableitung zu wählen, die den Mittelwert darstellt und von den zweiten Mitteln (10) integriert wird.

**17.** System nach Anspruch 16,
**dadurch gekennzeichnet, dass** die dritten Mittel wenigstens einen Voter (6) aufweisen.

**18.** System nach einem der Ansprüche 14 bis 17,
**dadurch gekennzeichnet, dass** es ferner wenigstens einen Motor (72) aufweist, dessen Ausgang mit dem Eingang von wenigstens einem der Steuermittel (77) verbunden ist.

**19.** Flugzeug,
**dadurch gekennzeichnet, dass** es ein Steuerungssystem (1) der Art aufweist, wie es unter einem der Ansprüche 14 bis 18 beschrieben wird.

**Claims**

**1.** Process for piloting an aircraft, intended for generating orders for piloting said aircraft according to at least one piloting axis, in which process one uses at least two different piloting laws, relating to said piloting axis and each making it possible to determine piloting orders as a function of parameters of the aircraft,
**characterized in that**, for said piloting axis, the following operations are carried out automatically and repetitively:

a) for each of said piloting laws, the derivative with respect to time of the function which corresponds to said piloting law and which takes into account the current values of the corresponding parameters is calculated;
b) the derivatives thus calculated are intercompared;
c) the derivative whose corresponding piloting law generates the piloting order of smallest absolute value is selected; and
d) a selected derivitive is integrated in such a way as to obtain said piloting order according to said piloting axis.

**2.** Process according to Claim 1,
**characterized in that** said piloting axis is the pitch axis of the aircraft.

**3.** Process according to Claim 2,
**characterized in that** at least one incidence protection law and one control law for the vertical load factor are used as piloting laws.

**4.** Process according to Claim 3, **characterized in that** the derivative of said control law for the vertical load factor LoiNz is calculated from the expression:

$$\text{d(LoiNz)/dt} = \text{d} [\text{F224.(d}\theta\text{/dt)} - \text{G220.Nzc} + \text{G221.(Nz-(cos}\theta\text{/cos}\Phi\text{)}$$
$$- \text{ProtVmax)]/dt} + \text{F225.[Nz-lim (Nzc} + \text{(cos}\theta\text{/cos}\Phi\text{)} + \text{ProtVmax)]}$$

in which:

- F224, F225, G220 and G221 are parameters;
- $\theta$ is the longitudinal attitude of the aircraft;
- $\Phi$ is the lateral attitude of the aircraft;
- Nz is the actual vertical load factor of the aircraft;
- Nzc is the commanded vertical load factor;
- ProtVmax is the maximum value of a protection of the speed of the aircraft; and
- lim is a limiting function.

**5.** Process according to either of Claims 3 and 4,
**characterized in that** the derivative of said incidence protection law Prot$\alpha$ is calculated from the expression:

$$d(Prot\alpha)/dt = d[F831.(d\theta/dt) - (CO.\alpha com) + F830.(\alpha-\alpha prot)]/dt +$$

$$F829.[\alpha-\alpha prot-\alpha com] + lim [F833.(dV/dt)]$$

in which:

- F829, F830, F831, F833 and CO are parameters;
- $\alpha$ is the actual angle of incidence of the aircraft;
- $\alpha com$ is the commanded angle of incidence;
- $\alpha prot$ is a value of protection of the angle of incidence;
- $\theta$ is the longitudinal attitude of the aircraft;
- V is the actual speed of the aircraft; and
- lim is a limiting function.

6. Process according to one of Claims 1 to 5,
   **characterized in that** said piloting axis is the pitch axis of the aircraft and **in that**, for operation d):

   - said selected derivative, whose piloting law generates the piloting order of smallest absolute value, is integrated only if this derivative lies between a first derivative with respect to time of a minimum attitude protection and a second derivative with respect to time of a maximum attitude protection;
   - otherwise, if said selected derivative is less than said first derivative, the latter is integrated and if said selected derivative is greater than said second derivative, said second derivative is integrated.

7. Process according to Claim 6,
   **characterized in that** one calculates:

   - said first derivative of minimum attitude protection Prot$\theta$min, from the expression:

$$d(Prot\theta min)/dt = F193.[K79.(d\theta/dt) + K78.d(d\theta/dt)/dt + K76.(\theta + 15)];$$

   and
   - said second derivative of maximum attitude protection Prot$\theta$max, from the expression:

$$d(Prot\theta max)/dt = F193.[K79.(d\theta/dt) + K78.d(d\theta/dt)/dt + K77.(\theta-30)],$$

   in which

   - F193, K76, K77, K78 and K79 are parameters; and
   - $\theta$ is the longitudinal attitude of the aircraft.

8. Process according to Claim 3, for manual piloting of the aircraft by means of at least one control stick (70),
   **characterized in that** a speed protection law is moreover used as piloting law, and **in that** the actuation of the control stick (70) is translated simultaneously into a load factor instruction, into a limit incidence instruction and into a limit speed instruction, which are used respectively by said control law for the load factor, said incidence protection law and said speed protection law.

9. Process according to Claim 8,
   **characterized in that** said speed protection law comprises a first law permitting exceeding of instruction and a second law not permitting exceeding of instruction.

10. Process according to Claim 9,
    **characterized in that** said first law is a law of protection with respect to an operational maximum speed (Vm0) of the aircraft and said second law is a law of protection with respect to a structural limit speed (Vd) of the aircraft.

11. Process according to Claim 1,
    **characterized in that** said piloting axis is the roll axis of the aircraft.

12. Process according to Claim 1,
    **characterized in that** said piloting axis is the yaw axis of the aircraft.

13. Process according to Claim 1, **characterized in that** said piloting axis is the control axis for the thrust of the engines of the aircraft.

14. System for piloting an aircraft, capable of generating orders for piloting said aircraft according to at least one piloting axis, said system (1) comprising at least two piloting means (2, 3, 76, 77, 79, 84, 86), each of said piloting means (2, 3, 76, 77, 79, 84, 86) comprising a piloting law which is different from that of the other piloting means and which makes it possible to determine piloting orders according to said piloting axis as a function of parameters of the aircraft, **characterized in that** each of said piloting means (2, 3, 76, 77, 79, 84, 86) is capable of calculating the derivative with respect to time of the function which represents the corresponding piloting law and which takes into account the current values of the corresponding parameters, and **in that** said piloting system (1) furthermore comprises:

    - first means (4, 78) for intercomparing the derivatives calculated by said piloting means (2, 3, 76, 77, 79, 84, 86) and for selecting a derivative; and
    - second means (10, 81) for integrating a selected derivative in such a way as to obtain said piloting order according to said piloting axis.

15. System according to Claim 14,
    **characterized in that** said first means comprise at least one voter (4, 78).

16. System according to either of Claims 15 and 16, said piloting axis being the pitch axis,
    **characterized in that** it comprises third means (6) for comparing a derivative, whose law generates the smallest nose-up piloting order, with derivatives of minimum and maximum attitude protection and for selecting the derivative exhibiting the median value, which will be integrated by said second means (10).

17. System according to Claim 16,
    **characterized in that** said third means comprise at least one voter (6).

18. System according to any one of Claims 14 to 17,
    **characterized in that** it comprises, moreover, at least one motor (72) whose output is connected to the input of at least one of said piloting means (77).

19. Aircraft,
    **characterized in that** it comprises a piloting system (1) as specified under any one of Claims 14 to 18.

Fig. 1

Fig. 2

Fig. 3

Fig. 4

Fig. 5

Fig. 6

Fig. 7